# EUROPÄISCHE PATENTSCHRIFT

(11) **EP 2 845 028 B1**
(45) Veröffentlichungstag und Bekanntmachung des Hinweises auf die Patenterteilung: **13.01.2016**
(21) Anmeldenummer: 13707682.4
(22) Anmeldetag: 07.03.2013
(51) Int. Cl.: G01S 7/52, G01S 7/524, G01S 7/527, G01S 15/93

(54) **VERFAHREN ZUM BETREIBEN EINES ABSTANDSSENSORS ZUR UMFELDERKENNUNG**
METHOD FOR OPERATING A DISTANCE SENSOR FOR DETECTING SURROUNDINGS
PROCÉDÉ POUR FAIRE FONCTIONNER UN CAPTEUR DE DISTANCE SERVANT À DÉTECTER UN ENVIRONNEMENT

(30) Priorität: 30.04.2012 DE 102012207164
(43) Veröffentlichungstag der Anmeldung: 11.03.2015
(73) Patentinhaber: Robert Bosch GmbH, 70442 Stuttgart (DE)
(72) Erfinder: KLOTZ, Albrecht, 71229 Leonberg (DE)
(86) Internationale Anmeldenummer: PCT/EP2013/054643
(87) Internationale Veröffentlichungsnummer: WO 2013/164115

(56) Entgegenhaltungen:
- DE-A1-102009 002 870
- US-A- 4 875 198
- US-A1- 2002 113 696
- US-A1- 2012 024 069

## Beschreibung

### Stand der Technik

Die Erfindung betrifft ein Verfahren zum Betreiben eines Abstandssensors zur Umfelderkennung in einem Fahrassistenzsystem. Die Erfindung betrifft zudem ein entsprechendes Fahrassistenzsystem und ein Computerprogramm zur Durchführung des Verfahrens.

Fahrassistenzsysteme sind Zusatzeinrichtungen in einem Fahrzeug, die den Fahrer beim Führen des Fahrzeugs unterstützen. Derartige Fahrassistenzsysteme umfassen typischerweise unterschiedliche Subsysteme, wie Fahrinformationssysteme oder prädikative Sicherheitssysteme. Für verschiedene dieser Subsysteme ist eine Umfeldsensorik erforderlich, die das Umfeld des Fahrzeuges überwacht, um beispielsweise Objekte zu detektieren, die potentielle Hindernisse auf der Fahrbahn darstellen.

Typische Verfahren zur Umfelderkennung in einem Fahrzeug nutzen Abstandssensoren, die basierend auf einem Sendepuls-Echo-Verfahren den Abstand zu Objekten im Umfeld des Fahrzeuges messen und deren Messdaten als Grundlage für die vom Fahrassistenzsystem zu generierende Reaktion dienen. Im Sendepuls-Echo-Verfahren wird üblicherweise die Laufzeit zwischen gesendetem Puls und empfangenem Echo gemessen. Um aus der Laufzeit einen eindeutigen Abstand ableiten zu können, arbeiten Abstandssensoren in einem Eindeutigkeitsbereich. Das bedeutet, dass sich die Länge der Messzyklen nach der maximal zu erwartenden Laufzeit des Sendepulses bestimmt.

Um beispielsweise eine Reichweite von 5 Metern zu realisieren, ist bei einer Schallgeschwindigkeit von 343 m/s ein Messzyklus von etwa 30 ms einzuhalten. Bei der Abstandsmessung sind die Messdaten des Abstandssensors mit stochastischen Signalen, insbesondere Störsignalen und Rauschen überlagert, was die Messgenauigkeit herabsetzt. Um nur solche Messwerte zu berücksichtigen, die ein tatsächliches Signal repräsentieren, und stochastische Signale möglichst auszublenden, sind unterschiedliche Verfahren bekannt.

Aus DE 10 2005 061 396 A1 ist eine Einrichtung bekannt, die Störungen direkt durch konstruktive Maßnahmen an der Sende- und Empfangseinrichtung reduziert. So werden von der Sendeeinrichtung ausgesandte Wellen, die unmittelbar von der Empfangseinrichtung detektiert werden, unterdrückt, indem die Wellensendeeinrichtung und/oder die Wellenempfangseinrichtung ein Horn zum gerichteten Senden und Empfangen umfasst. Auf diese Weise kann zumindest eine Dämpfung von Umgehungswellen erzielt werden. Alternativ werden Signalverarbeitungsalgorithmen eingesetzt, um Störsignale zu identifizieren und zu unterdrücken. Aus DE 103 23 639 A1 ist ein Verfahren zur Erfassung von Objekten bekannt, in dem die Erfassungseigenschaften der Erfassungseinrichtung adaptiv an die Umwelt angepasst werden. Dabei werden die Erfassungsparameter, etwa der maximale räumliche Erfassungsbereich eines Ultraschallsensors, bei stochastisch auftretenden Erfassungssignalen so adaptiert, dass die stochastisch auftretenden Erfassungssignale nicht mehr detektiert werden. Im konkreten Fall wird zur Anpassung des räumlichen Erfassungsbereiches die Parameterkennlinie eines Ultraschallsensors variiert. DE 35 19 254 A1 beschreibt ein weiteres Verfahren, in dem wenigstens ein Empfindlichkeitsparameter oder eine Empfindlichkeitskennlinie in Abhängigkeit von der Luftfeuchtigkeit und/oder der Temperatur nachgesteuert wird. Dadurch ist eine sichere Bordsteinerkennung und Parklückenlokalisierung bei veränderlichen Witterungsbedingungen möglich.

DE 10 2009 002870 A1 beschreibt ein Ultraschallsystem bei dem ein erster Impuls mit einer definierten Impulsenergie gesendet wird. Ein zweiter Impuls wird gesendet wobei die Impulsenergie abhängig von der Überprüfung des Echos des ersten Impulses geändert wird.

Beim Einsatz von Abstandssensoren in modernen Fahrassistenzsystemen ist das Minimieren von Störsignalen unerlässlich, da ein Fahrassistenzsystem Situationen nur auf Basis der gewonnen Umfelddaten einschätzen kann. Folglich sind die Anforderungen an die Stabilität und die Zuverlässigkeit der verwendeten Sensorsysteme sowie der sich anschließenden Datenauswertung hoch. Es besteht daher ein anhaltendes Interesse daran, Störungen möglichst zuverlässig zu identifizieren und zu unterdrücken, um die bereitgestellten Daten optimal für das unterstützte Fahren nutzen zu können.

### Offenbarung der Erfindung

Erfindungsgemäß wird ein Verfahren zum Betreiben mindestens eines Abstandssensors zur Umfelderkennung gemäss Anspruch 1.

Erfindungsgemäß wird weiterhin ein Fahrassistenzsystem zur Durchführung des vorstehend beschriebenen Verfahrens gemäss Anspruch 9.

Der Abstandssensor kann Teil der Umfeldsensorik eines Fahrassistenzsystems mit unterschiedlichen Subsystemen sein, beispielsweise mit einem Einparkassistenten, einem Seitenüberwachungsassistenten oder einem Spurhaltesystem. Dabei dient die Umfeldsensorik des Fahrassistenzsystems zur Überwachung des Fahrzeugumfeldes, wobei etwa Ultraschallsensoren, Radarsensoren, Infrarotsensoren, LIDAR-Sensoren, optische Sensoren oder Kombinationen hieraus als Umfeldsensorik eingesetzt werden. Zur Abstandsmessung finden insbesondere solche Sensoren Anwendung, die nach dem Prinzip eines Puls-Echo-Verfahrens den Abstand zu Objekten im Umfeld des Fahrzeuges bestimmen. Bevorzugt eignen sich Ultraschallsensoren als Abstandssensoren.

Im Allgemeinen umfassen die Sensorparameter des Abstandssensors Sendeparameter, die den Sendepuls und dessen Sendespektrum charakterisieren. Solche Parameter sind beispielsweise der Sendestrom, die Sendepulsdauer, die Frequenz, die Amplitude oder die Signalform. So kann ein Sendepuls mit definiertem Sendestrom sowie definierter Frequenz, Amplitude und Signalform, beispielsweise einem Rechtecksendepuls, ausgesendet werden. Weiterhin kann das Sendespektrum in einem Parameter, beispielsweise der Frequenz, moduliert sein. Für Abstandssensoren eignet sich insbesondere ein Sendespektrum, dessen Frequenz sich zeitlich verändert (Chirps). Weiterhin umfassen die Sensorparameter Empfangsparameter, zum Beispiel die Kennlinien des Sensors, die unterschiedlichen Abständen Signalamplituden zuordnen.

Ein Messzyklus bezeichnet im Rahmen der Erfindung eine definierte Abfolge von Sende- und Empfangsintervallen. Insbesondere bei Abstandssensoren, die den Abstand nach dem Prinzip eines Sendepuls-Echo-Verfahrens bestimmen, umfasst ein Messzyklus mindestens ein Sendeintervall, in dem ein Sendepuls ausgesendet wird, und mindestens ein Empfangsintervall, in dem Echos des Sendepulses empfangen werden können. Dabei bestimmt sich die minimale Länge des Messzyklusses typischerweise nach der maximal zu erwartenden Zeit zwischen Aussenden des Sendepulses und Empfangen des zugehörigen Echos.

Der Abstandssensor kann im Rahmen der Erfindung sowohl einen Sendepuls aussenden als auch ein Echo empfangen. Diese Bauart ist zwar vorteilhaft aber keineswegs zwingend. Gleichermaßen sind auch baulich getrennte Sender und Empfänger möglich. Bei baulich getrennten Einheiten werden mindestens zwei Abstandssensoren zur Durchführung des erfindungsgemäßen Verfahrens eingesetzt, wobei ein Abstandssensor als "Sender" fungiert, wenn er einen Sendepuls abgibt, und ein Abstandssensor als "Empfänger" fungiert, wenn er ein Signal empfängt.

Das erfindungsgemäße Verfahren kann im Rahmen einer Laufzeitmessung durchgeführt werden, wobei die Laufzeitmessung mit Hilfe mindestens eines Abstandssensors durchgeführt wird. Dabei wird der Abstandssensor zunächst angesteuert, Sendepulse mit bekannten Sensorparametern auszusenden. Die Ansteuerung kann in einem Fahrassistenzsystem beispielsweise zentral von einem Steuergerät (Electronic Control Unit, ECU) oder von einer dem Sensor zugeordneten Elektronikeinrichtung aus erfolgen. Dabei sind die Sensorparameter, etwa der Sendestrom, die Frequenz, die Amplitude, die Sendepulsdauer oder die Modulation eines Sendepulses bzw. aufeinanderfolgender Sendepulse, variabel und können an die jeweilige Situation angepasst werden. Anschließend werden die ausgesendeten Sendepulse bei Reflektion an Objekten als Echos von einem oder mehreren Abstandssensor(en) detektiert. Aus der Laufzeit eines Sendepulses, also der Zeit zwischen Senden des Sendepulses und Empfangen des Echos, ergibt sich dann unter Berücksichtigung der Geschwindigkeit des Signals und gegebenenfalls des Fahrzeuges der Abstand zwischen dem Objekt und dem Abstandssensor.

In einer Ausführungsform kann die Signalverarbeitung von empfangenen Signalen sensorindividuell für einzelne Abstandssensoren und/oder zentral für mehrere Abstandssensoren erfolgt. So können vom Abstandssensor empfangene Signale einer sensorindividuellen Einheit, wie einer dem Sensor zugeordneten Elektronikeinrichtung, zugeführt werden und dort weiterverarbeitet werden. Alternativ oder zusätzlich können die Daten einer übergeordneten Einheit, etwa dem zentralen Steuergerät des Fahrassistenzsystems, bereitgestellt werden, wo aus der Laufzeit Abstandsinformationen generiert werden. Aus den Abstandsinformationen unterschiedlicher Sensoren können Objekthypothesen, die die Abstandsinformationen und Ortsangabe im Umfeld des Fahrzeuges verknüpfen, aufgestellt werden und gegebenenfalls eine Umfeldkarte generiert werden, auf deren Basis beispielsweise weitere Fahrmanöver berechnet werden können.

Im Rahmen der Datenverarbeitung werden die empfangenen Signale zunächst in Echosignale und Störsignale klassifiziert. Eine Implementierung des erfindungsgemäßen Verfahrens sieht dazu im Messzyklus ein Horchfenster vor. Vorzugsweise ist der Messzyklus in mindestens ein Empfangsintervall und mindestens ein Horchfenster aufgeteilt, wobei in dem Horchfenster kontinuierliche und diskontinuierliche Störungen erkannt und unterschieden werden. Die Aufteilung des Messzyklusses ergibt sich aus der zu erwartenden Echocharakteristik bei gegebenem Sendespektrum. So kann beispielsweise für eine gegebene Amplitude des Sendepulses eine Kennlinie berechnet werden, die die zu erwartende Amplitude eines Echosignals mit dem Abstand bzw. mit der Laufzeit korreliert. Im Laufe eines Messzyklusses ergibt sich eine vom zu detektierenden Objekt abstandsabhängige Laufzeit des Echosignals, etwa bei 5 m Objektabstand ein Zeitfenster von ungefähr 30 ms, in der physikalisch plausible Signale empfangen werden können.

Zusätzlich zu dem Empfangsintervall kann ein Horchfenster vorgesehen werden, in dem keine physikalisch plausiblen Signale empfangen werden können. Innerhalb des Horchfensters können daher kontinuierliche und/oder diskontinuierliche Störungen detektiert werden. Die Länge des Horchfensters ist typischerweise kleiner als die Länge des Empfangsintervalls, um die Messrate des Abstandssensors möglichst wenig zu beeinflussen, und kann im Bereich von einigen Millisekunden, üblicherweise zwischen 1 - 5 ms, beispielsweise bei 2 ms, liegen.

Kontinuierliche Störsignale können durch das Bestimmen der Rauschamplitude im Horchfenster identifiziert werden, indem die Signalamplitude zum Beispiel über die Länge des Horchfensters gemittelt wird. Derartige Störsignale können akustische oder elektrische Störungen sein, die im Fahrzeug durch übliche Fahrgeräusche und weitere Elektronik verursacht werden. Auch diskontinuierliche Störsignale können im Horchfenster identifiziert werden, indem beispielsweise eine Detektionsschwelle für Signale im Horchfenster festgelegt wird. Liegt die Signalamplitude oberhalb der Detektionsschwelle, kann von einer impulsförmigen, diskontinuierlichen Störquelle ausgegangen werden.

Diskontinuierliche Störsignale werden weiterhin in Fremdstörungen oder Eigenstörungen unterteilt. Dabei bezeichnen Fremdstörungen Störsignale, die etwa von Abstandssensoren anderer Fahrzeuge stammen, und Eigenstörungen solche, die von Abstandssensoren am eigenen Fahrzeug stammen. Eigenstörungen entstehen insbesondere, wenn ein Abstandssensor einen Sendepuls sendet, der anschließend mehrfach zwischen Objekten reflektiert wird und von dem sendenden Abstandssensor oder einem anderen Abstandssensor am Fahrzeug empfangen wird. Eigenstörungen können auch entstehen, wenn ein Signal von einem weit entfernten Objekt stark reflektiert wird und dessen Echo in einen nachfolgenden Messzyklus fällt. Weit entfernte Objekte sind dabei Objekte, die nach Maßgabe des Messzyklusses aufgrund Ihrer Entfernung nicht mehr erfasst werden sollten. Diese sind weiterhin stark reflektierend, wenn die Amplitude des reflektierten Signals beziehungsweise des Echos von dem Objekt nur zu dem Grad absorbiert wird, dass die Amplitude des Echos ausreicht, um am Sensor als physikalisch plausible Amplitude erkannt zu werden. Eine typische Situation, in der es zu solchen Mehrfachreflektionen oder Reflektionen von weit entfernten, stark reflektierenden Objekte kommen kann, sind Einparkmanöver in eine von Objekten begrenzte Parklücke, etwa in eine Garage. Derartige Signale führen zu Störungen in der Abstandsbestimmung, da bei Mehrfachreflektionen oder bei Reflektionen von weit entfernten, stark reflektierenden Objekte der Signallauf unbekannt ist und dadurch die Laufzeit-Amplituden-Korrelation beziehungsweise die entsprechende Laufzeit-Abstands-Korrelation verzerrt wird. Eigenstörungen wie auch Fremdstörungen resultieren damit in "unechten" Signalen, die beispielsweise zum Detektieren von "Geisterobjekten" führen.

In einer Implementierung des erfindungsgemäßen Verfahrens werden Eigenstörungen anhand einer Plausibilitätsprüfung erkannt. Vorzugsweise umfasst die Plausibilitätsprüfung, dass die Detektionsschwelle im Horchfenster angepasst wird und insbesondere erhöht wird, wenn diskontinuierliche Störsignale im Horchfenster detektiert werden. Die Höhe der Detektionsschwelle hängt somit von der Amplitude der Störsignale ab. Mit der sich daraus ergebenden verringerten Detektionsempfindlichkeit im Horchfenster kann eine Plausibilitätsprüfung in Bezug auf Eigenstörungen erfolgen. Werden bei erhöhter Detektionsschwelle keine diskontinuierlichen Störsignale im Horchfenster detektiert, ist die Wahrscheinlichkeit dafür, dass es sich um Eigenstörungen handelt hoch. Werden im Gegensatz dazu trotz erhöhter Detektionsschwelle weiterhin diskontinuierliche Störsignale im Horchfenster detektiert, handelt es sich mit hoher Wahrscheinlichkeit um Fremdstörungen. Dieser Zusammenhang ergibt sich aus der Annahme, dass die Amplitude von Eigenstörungen durch Mehrfachreflektion oder durch Reflektionen von weit entfernten, stark reflektierenden Objekten typischerweise niedriger ist als die von Fremdstörungen.

Eine weitere Variante Eigenstörungen und Fremdstörungen anhand von Störsignalen im Horchfenster zu diskriminieren, bezieht die Anzahl beziehungsweise die Dauer ein, mit der die Störsignale die Detektionsschwelle überschreiten. Ist die Anzahl der Überschreitungen klein und die Detektionsschwelle klein, ist die Wahrscheinlichkeit dafür, dass es sich um Eigenstörungen handelt hoch. Im Fall von Eigenstörungen beträgt die Anzahl der Überschreitungen typischerweise eins oder zwei und die Detektionsschwelle liegt etwa im Bereich des Untergrundrauschens, Werden im Gegensatz dazu viele Überschreitungen der Detektionsschwelle im Horchfenster detektiert, handelt es sich mit hoher Wahrscheinlichkeit um Fremdstörungen.

In einer weiteren Implementierung des erfindungsgemäßen Verfahrens umfasst die Plausibilitätsprüfung zusätzliche Informationen einer übergeordneten Einheit, die die Daten mehrerer Sensoren verarbeitet. Die übergeordnete Einheit kann das zentrale Steuergerät des Fahrassistenzsystems umfassen, wo die Abstandsinformationen unterschiedlicher Sensoren für Objekthypothesen und das Generieren einer Umfeldkarte fusioniert werden. Die Plausibilitätsprüfung kann insbesondere Informationen der Objekterkennung umfassen, da für Mehrfachreflektionen von Sendepulsen und den sich daraus ergebenden Eigenstörungen die Anwesenheit eines reflektierenden Objekts notwendig ist. Auch die Objektkontur kann weiteren Aufschluss darüber geben, ob Mehrfachreflektionen und damit Eigenstörungen möglich sind.

Zusätzlich oder alternativ kann die übergeordnete Einheit als Entscheidungsinstanz implementiert sein, die Relevanzaussagen hinsichtlich der Störsignale trifft. Dazu eignen sich beispielsweise Daten anderer Subsysteme und insbesondere anderer Umfeldsensorik. Bewegt sich das Fahrzeug etwa in einer Vorwärtsrichtung und ergeben sich Störsignale für Abstandssensoren, die hinten am Fahrzeug angebracht sind, so können derartige Störsignale unberücksichtigt bleiben. Ergeben sich jedoch Störsignale für Abstandssensoren, die in einem relevanten Bereich, etwa beim Vorwärtseinparken vorne am Fahrzeug, angebracht sind, so werden derartige Störsignale im erfindungsgemäßen Verfahren berücksichtigt.

In einer weiteren Implementierung des erfindungsgemäßen Verfahrens wird zusätzlich die Rauschamplitude in die Plausibilitätsprüfung für Eigenstörungen einbezogen. Beispielsweise können mehrere, hintereinander ausgesendete Pulse zu einer Erhöhung der Rauschamplitude im Horchfenster führen. Da Sendepulse typischerweise eine Länge von einigen hundert Mikrosekunden haben, können Sequenzen von mehreren Pulsen im Horchfenster im Mittel in einer erhöhten Rauschamplitude resultieren und somit das Vorliegen von Eigenstörungen indizieren. Umgekehrt kann das Verfahren zur Rauschermittelung ein Horchfenster umfassen, das so ausgelegt wird, dass impulsförmige Störquellen, die dem Anregungsimpuls entsprechen herausgefiltert werden und damit nur das Untergrundrauschen und dessen Veränderung über die Zeit als Messgröße zur Verfügung steht. So kann auch die Schwelle des kontinuierlichen Signals im Horchfenster genutzt werden um Eigenstörungen zu erkennen.

In Reaktion auf erkannte Eigenstörungen kann mindestens einer der folgenden Sensorparameter angepasst werden: ein Sendestrom, eine Sensorempfindlichkeit oder eine Sendepulslänge. In einer Ausführungsform kann dies durch Anpassen, insbesondere Verringern, des Sendestroms des Abstandssensors erreicht werden. Dazu können beispielsweise diskrete Parameter für den Sendestrom in einer Steuereinheit hinterlegt sein und der Abstandssensor von der Steuereinheit mit unterschiedlichen Sendeströmen betrieben werden. Alternativ oder zusätzlich kann die Sensorempfindlichkeit beispielsweise durch Verändern einer implementierten Kennlinie oder durch Hin- und Herschalten zwischen vorgespeicherten Kennlinien des Abstandssensors angepasst werden oder der Sendepuls kann verkürzt werden. In weiteren Ausführungsform des erfindungsgemäßen Verfahrens wird die Länge des Messzyklusses, insbesondere des Empfangszyklusses, angepasst.

In einer weiteren Implementierung des erfindungsgemäßen Verfahrens umfasst die Plausibilitätsprüfung für Eigenstörungen Informationen bezüglich der Sensorparameter vorhergehender Sendepulse. Wurde ein Sendestrom beispielweise schon in dem unmittelbar vorhergehenden Messzyklus angepasst, insbesondere verringert, oder ist ein Objekt bereits aus vorhergehenden Messzyklen bekannt, so können diese Informationen ebenfalls zur Plausibilisierung von Eigenstörungen genutzt werden. Eine bereits vorgenommene Verringerung des Sendestroms indiziert zum Beispiel Fremdstörungen. Ein aus vorhergehenden Messzyklen bereits erkanntes Objekt im Umfeld des Fahrzeuges, indiziert dagegen mögliche Mehrfachreflektionen und damit auch mögliche Eigenstörungen.

Das erfindungsgemäße Fahrassistenzsystem ist vorzugsweise zur Durchführung des vorstehend beschriebenen Verfahrens ausgebildet. Dabei stellen die einzelnen Komponenten funktionale Komponenten oder Routinen dar, die beispielsweise im Rahmen eines Computerprogramms auf einer elektronischen Einrichtung, wie einer programmierbaren Computereinrichtung, ausgeführt werden. Bei der Computereinrichtung kann es sich beispielsweise um ein Steuergerät (ECU) zur Implementierung eines Fahrassistenzsystems beziehungsweise eines Subsystems hiervon oder zur Steuerung einzelner Abstandssensoren handeln.

Die elektronische Einrichtung kann als zentrale oder sensorindividuelle Einrichtung mit dem Abstandssensor über Steuersignale kommunizieren. So können Steuersignale generiert werden, die den Abstandssensor triggern, Sendepulse mit einem definierten Sendespektrum auszusenden. Umgekehrt kann der Abstandssensor empfangene Signale an die elektronische Einrichtung zur Signalverarbeitung weiterleiten. So erfolgt im Rahmen der Signalverarbeitung die Klassifizierung des empfangenen Signals als Echosignal oder als Störsignal. In Reaktion auf diese Auswertung können weitere Steuersignale generiert werden, die an den Abstandssensor zurückgesendet werden, und dessen Sensorparameter situationsbedingt anpassen.

Erfindungsgemäß wird weiterhin ein Computerprogramm zur Durchführung eines der hierin beschriebenen Verfahren vorgeschlagen, wenn das Computerprogramm auf einer programmierbaren Einrichtung ausgeführt wird. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, oder auf einer entfernbaren CD-ROM, DVD oder USB-Stick. Zusätzlich oder alternativ kann das Computerprogramm auf einer Computereinrichtung wie einem Server zum Herunterladen bereitgestellt werden, z.B. über ein Datennetzwerk wie das Internet oder eine Kommunikationsverbindung wie etwa eine Drahtlosverbindung.

### Vorteile der Erfindung

Die Erfindung ermöglicht es, die Umfelderkennung mit Abstandssensoren zu verbessern. Insbesondere resultiert die situationsabhängige Anpassung von Sensorparametern in einer verbesserten und zuverlässigeren Datenverarbeitung. Dadurch stehen qualitativ hochwertige Daten zur Verfügung, die die Systemverfügbarkeit und Robustheit des Fahrassistenzsystems erhöhen. Insbesondere die Unterscheidung zwischen Fremdstörungen und Eigenstörungen, die typischerweise aus Mehrfachreflektionen von Sendepulsen entstehen und daher keine unmittelbare Laufzeit-Abstands-Korrelation ermöglichen, können mit Hilfe der Erfindung erkannt werden und weitere Reaktionen triggen. Weiterhin verbessert die Erfindung durch Plausibilitätsprüfungen auf unterschiedlichen Ebenen der Signalverarbeitung das Identifizieren von Eigenstörungen.

In einer vorteilhaften Ausführungsform der Erfindung können die Sensorparameter des Abstandssensors so angepasst werden, dass derartige Eigenstörungen unterdrückt werden. Insbesondere eine Reduzierung des Sendestroms eines Abstandssensors, der proportional zur Sendeamplitude ist, führt dazu, dass das Signal bei Mehrfachreflektion oder Reflektionen von weit entfernten, stark reflektierenden Objekten schneller abklingt. Durch die Verlängerung des Messzyklusses in Reaktion auf Eigenstörungen können Reflektionen von weit entfernten, stark reflektierenden Objekten vermindert werden.

Im Vergleich zum Anpassen der Sensorparameter durch Verändern der Kennlinie beziehungsweise Umschalten zwischen Kennlinien ist das Anpassen des Sendestromes schneller. Dadurch werden Detektionslücken verringert, was gleichzeitig in einer erhöhten Systemverfügbarkeit resultiert. Ein Anpassen der Sensorempfindlichkeit, beispielsweise durch Anpassen der Kennlinie beziehungsweise durch Umschalten zwischen Kennlinien, hat dagegen den Vorteil, dass gegenüber diskreten Sendestromparametern eine feinere Auflösung möglich ist.

### Kurze Beschreibung der Zeichnungen

Weitere Aspekte und Vorteile der Erfindung werden nunmehr anhand der beigefügten Zeichnungen eingehender beschrieben. Hierbei zeigen:
- Figur 1: ein mit einem erfindungsgemäßen Fahrassistenzsystem ausgerüstetes Fahrzeug in einer beispielhaften Fahrsituation;
- Figur 2: schematisch ein Signalverlauf für einen kompletten Messzyklus zur Abstandsmessung;
- Figur 3: ein Fahrzeug gemäß Figur 1 in einer beispielhaften Fahrsituation mit angepassten Sensorparametern;
- Figur 4: ein beispielhafter Kennlinienverlauf, der durch Verschieben der Kennlinie oder Umschalten zwischen Kennlinien angepasst werden kann;
- Figur 5: eine Arbeitsweise des Fahrassistenzsystems aus den Figuren 1 und 2 in Form eines Flussdiagramms.

### Ausführungsformen der Erfindung

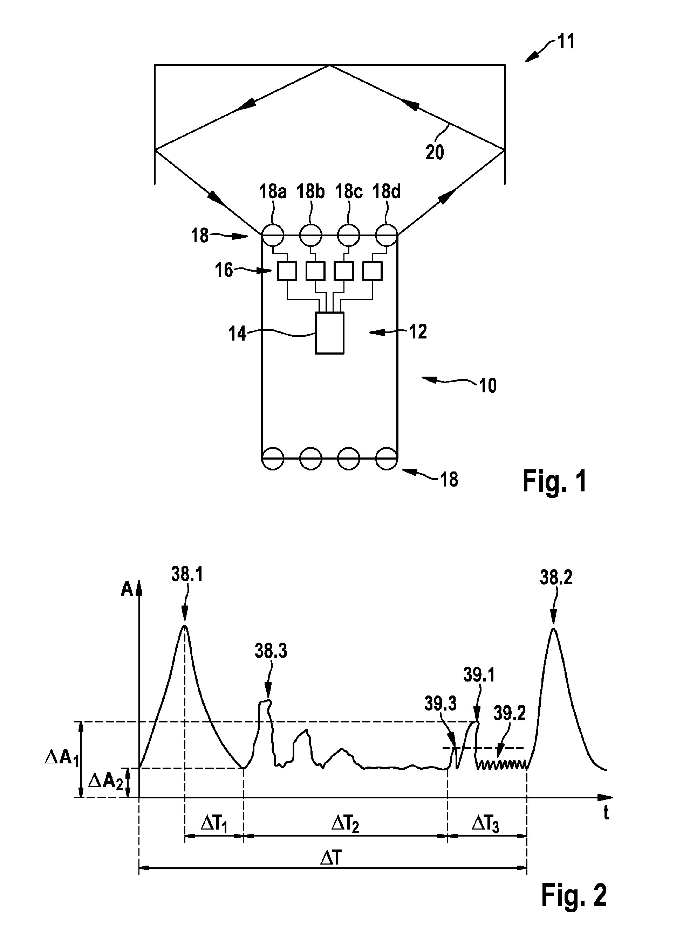

In Figur 1 ist schematisch eine Fahrsituation mit einem Fahrzeug 10 gezeigt, das sich beispielsweise in eine Garageneinfahrt oder eine begrenzte Parklücke 11 bewegt. Das Fahrzeug 10 ist mit einem Fahrassistenzsystem 12 ausgerüstet, das ein ultraschallbasiertes Sensorsystem zur Umfeldüberwachung 18 mit Ultraschallsensoren 18a, 18b, 18c, 18d vorne und hinten am Fahrzeug 10 umfasst. Gesteuert wird das ultraschallbasierte Sensorsystem 18 von einzelnen den Ultraschallsensoren 18a, 18b, 18c, 18d zugeordneten Einrichtungen 16 und einer übergeordneten Einheit 14, die typischerweise ein zentrales Steuergerät des Fahrassistenzsystems 12 darstellt. Statt der in Figur 1 beispielhaft gezeigten Ultraschallsensoren 18a, 18b, 18c, 18d können auch andere Abstandssensoren, wie LIDAR-oder Radarsensoren, zur Laufzeitmessung eingesetzt werden.

Bei der Anfahrt des Fahrzeuges 10 auf die begrenzte Parklücke oder die Garageneinfahrt 11 senden die vorderen Ultraschallsensoren 18a, 18b, 18c, 18d Ultraschallpulse aus, um den Abstand zwischen dem Fahrzeug 10 und der Begrenzungen 11 aus der Laufzeit der Ultraschallpulse zu bestimmen. Dabei kann, wie in Figur 1 schematisch dargestellt, eine Situation auftreten, in der ein Ultraschallsensor 18d ein Ultraschallsignal 20 aussendet, das mehrfach an der Parklücken- oder Garagenbegrenzung 11 reflektiert wird und anschließend von einem Ultraschallsensor 18a empfangen wird. Derartige Signale sind Eigenstörungen des ultraschallbasierten Sensorsystems 18, die in der Signalverarbeitung ausgefiltert werden. Die Signalverarbeitung findet dabei in sensorindividuellen Einheiten 16 oder einer zentralen Elektronikeinheit 14 statt, wobei Teilschritte der Signalverarbeitung in einer der Einheiten 14, 16 oder auf die Einheiten 14, 16 verteilt stattfinden.

In Figur 2 ist schematisch ein beispielhafter, nicht maßstabsgerechter Signalverlauf der von einem Ultraschallsensor 18a, 18b, 18c, 18d gemessenen Signalamplitude, A, gegen die Zeit, t, für einen kompletten Messzyklus ΔT aufgetragen. Der Messzyklus ΔT beginnt mit dem Sendepuls 38.1 und reicht bis zu einem weiteren Sendepuls 38.2. Zunächst wird mindestens ein Ultraschallsensor 18a, 18b, 18c, 18d zum Senden eines Ultraschallpulses für einen bestimmten Zeitraum angeregt, wobei während einer Abklingdauer ΔT₁ kein Empfang möglich ist.

Nach der Abklingdauer ΔT₁ ist der Ultraschallsensor für ein Empfangsintervall ΔT₂ empfangsbereit, wobei das Empfangsintervall ΔT₂ von der gewünschten Reichweite, etwa 5 m, abhängt. In diesem Zeitfenster kann der Sensor Echosignale, die von Objekten reflektiert wurden, empfangen. Neben dem Empfangsintervall ΔT₂ und der Abklingdauer ΔT₁ ist weiterhin ein Horchfenster ΔT₃, hier beispielsweise dargestellt unmittelbar nach dem Empfangsintervall ΔT₂, vorgesehen, um Störsignale zu erkennen. Im Laufe eines Messzyklusses ergeben sich somit das Empfangsintervall ΔT₂, in denen physikalisch plausible Signale empfangen werden können, und das Horchfenster ΔT₃, in denen keine physikalisch plausiblen Signale sondern Störsignale empfangen werden.

Innerhalb des Horchfensters ΔT₃ werden der Rauschpegel mit einer mittleren Amplitude ΔA₂ resultierend aus kontinuierlichen Störsignalen 39.2 und impulsartige, diskontinuierliche Störungen 39.1 mit einer Amplitude ΔA₁ detektiert. Weiterhin werden die impulsartigen, diskontinuierlichen Störungen mit der Amplitude ΔA₁ im Rahmen der Erfindung in Fremdstörungen und Eigenstörungen unterteilt.

Um Eigenstörungen zu identifizieren und von Fremdstören zu unterscheiden werden verschiedene Plausibilitätsprüfungen bezüglich diskontinuierlicher Signale 39.1 durchgeführt. So wird zunächst die Detektionsschwelle 39.3 im Horchfenster ΔT₃ erhöht, um festzustellen, ob die Amplitude ΔA₁ des Störsignals 39.1 für mehrfach reflektierte Eigenstörungen plausibel ist. Anschließend können weitere Plausibilitätsprüfungen durchgeführt werden, die beispielsweise die tatsächliche Detektion eines Objekts 11 oder die Erhöhung der Rauschamplitude 39.2 im Horchfenster ΔT₃ einbeziehen. Auch die unmittelbar vor Aussenden des Pulses 38.1 vorgenommenen Aktionen, etwa das Verringern des Sendestromes oder das Umschalten zwischen Kennlinien, kann in die Plausibilitätsprüfung einfließen.

Um erkannte Eigenstörungen zu unterdrücken, sieht das erfindungsgemäße Fahrassistenzsystem 12 vorstehend beschreibenden Algorithmus vor, der die empfangenen Signale zunächst in Echo- und Störsignale klassifiziert. Abhängig von der Auswertung der Störsignale, insbesondere der erkannten Eigenstörungen, wird dann der Sendestrom des Ultraschallsensors 18a reduziert, um mehrfachreflektierte Signale 20 zu vermeiden. Neben der Anpassung des Sendestromes kann auch die Kennlinie des betroffenen Ultraschallsensors 18d modifiziert werden, um mehrfach-reflektierte Signale zu unterdrücken.

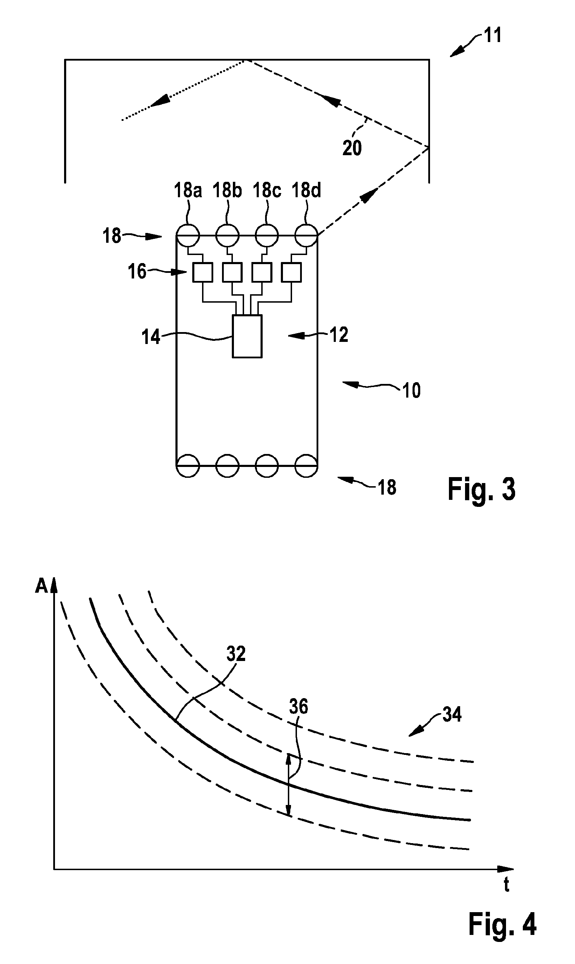

In Figur 3 ist beispielhaft eine Reaktion des erfindungsgemäßen Fahrassistenzsystems 12 auf Eigenstörungen gezeigt, wobei der Sendestrom des Ultraschallsensors 18d reduziert wird. Durch den reduzierten Sendestrom ist die Amplitude im Sendespektrum des ausgesendeten Sendepulses 20 ebenfalls reduziert, was die Reichweite des Sendepulses verkleinert. Dadurch wird die Amplitude des Sendepulses, wie in Figur 3 schematisch dargestellt, so weit abgeschwächt, dass die Amplitude für andere Ultraschallsensoren 18a, 18b, 18c nicht mehr detektierbar ist oder diese nicht mehr erreicht. So werden Eigenstörungen effektiv unterdrückt und das Auftreten von Geisterobjekten oder sonstigen Fehlmeldungen wird minimiert.

Alternativ oder zusätzlich zur Verkleinerung des Sendestromes können Eigenstörungen auch durch Verändern der Kennlinie 32 des Abstandssensors 18a, 18b, 18c, 18d unterdrückt werden. Figur 4 zeigt beispielhaft eine Kennlinie 32, die die Amplitude A von empfangenen Signalen mit der Laufzeit t oder äquivalent dem Abstand d eines detektierten Objekts 11 verknüpft. Dabei ergibt sich aus der Entfernungsdämpfung der Amplitude A für jede gemessene Laufzeit t zwischen gesendetem Sendepuls 38.2 und empfangenem Echosignal 38.3 eine zu erwartende maximale Amplitude A. In Reaktion auf erkannte Eigenstörung kann das erfindungsgemäße Fahrassistenzsystem, wie in den Figuren 1 und 2 gezeigt, entweder den Sendestrom des betreffenden Abstandssensors 18a, 18b, 18c, 18d reduzieren oder die Kennlinie 32 entsprechend anpassen. So kann die beispielhaft gezeigte Kennlinie 32 der Figur 4 nach oben oder unten 36 verschoben werden, oder aber es kann auf einer vorgespeicherten Kennlinie 34 umgeschaltet werden.

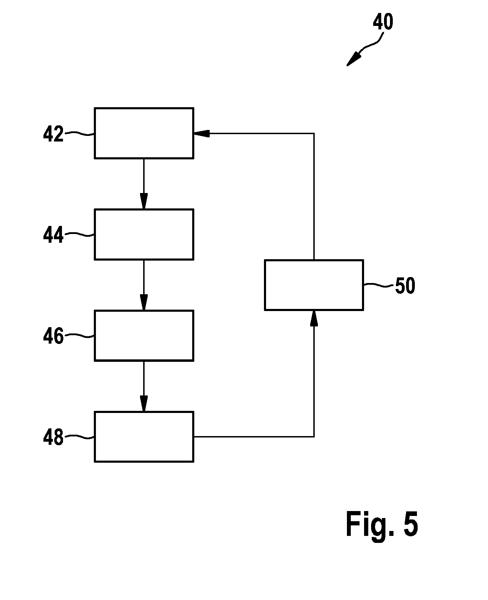

In Figur 5 ist ein Flussdiagramm 40 dargestellt, dass das Zusammenspiel der Komponenten des erfindungsgemäßen Fahrassistenzsystems 12 gemäß der Figuren 1 und 2 darstellt. In einem Schritt 42 werden Sendepulse mit bekannten Sensorparametern, etwa einem Sendestrom, von dem Abstandssensor 18a, 18b, 18c, 18d ausgesendet. Damit beginnt der Messzyklus ΔT, wie beispielhaft in Figur 2 gezeigt. In Schritt 44 ist der Abstandssensor 18a, 18b, 18c, 18d empfangsbereit und empfängt Signale bis zum Ende des Messzyklus ΔT.

In Schritt 46 werden die empfangenen Signale analysiert und als Echosignale oder als Störsignale klassifiziert. Dabei werden empfangene Signale basierend auf Laufzeit t überprüft, ob diese innerhalb eines physikalisch-plausiblen Bereiches ΔT₂ liegen. Liegen die empfangenen Signale im Horchfenster ΔT₃, werden diese als kontinuierliche oder diskontinuierliche Störquellen identifiziert.

In einem nächsten Schritt 48 erfolgt eine weitere Unterscheidung zwischen Eigenstörungen und Fremdstörungen. Dazu wird, wie oben beschrieben, eine Plausibilitätsprüfung durchgeführt, die unterschiedliche Elemente umfassen kann. So kann zunächst die Detektionsschwelle für diskontinuierliche Störsignale im Horchfenster ΔT₃ erhöht werden. Dies kann mit Plausibilitätsprüfungen auf Basis von Objektinformationen einer übergeordneten Einheit 14, der Rauschamplitude ΔA₂ im Horchfenster ΔT₃ und/oder vorangegangenen Aktionen des Abstandssensors 18a, 18b, 18c, 18d ergänzt werden.

Nach Auswerten der Störsignale in Schritt 50 wird mindestens ein Sensorparameter des Abstandssensors 18a, 18b, 18c, 18d für folgende Pulse entsprechend angepasst. Die adaptierten Sendepulse ermöglichen es, Störsignale, insbesondere Eigenstörungen, zu unterdrücken.

Die Erfindung ist nicht auf die hier beschriebenen Ausführungsbeispiele und die darin hervorgehobenen Aspekte beschränkt. Vielmehr ist innerhalb der durch die anhängenden Ansprüche angegebenen Bereiche eine Vielzahl von Abwandlungen möglich, die im Rahmen fachmännischen Handelns liegen.

## Patentansprüche

1. Verfahren (40) zum Betreiben mindestens eines Abstandssensors (18a, 18b, 18c, 18d) zur Umfelderkennung mit folgenden Schritten:
a) Aussenden (42) mindestens eines Sendepulses (38.1, 38.2) mit bekannten Sensorparametern (32, 34);
b) Empfangen (44) von Signalen in mindestens einem Messzyklus (ΔT);
c) Klassifizieren (46) der empfangenen Signale (44) als Echosignale (38.3) oder Störsignale (39.1, 39.2), wobei der Messzyklus (ΔT) in mindestens ein Empfangsintervall (ΔT₂) und mindestens ein Horchfenster (ΔT₃) aufgeteilt ist und in dem Horchfenster (ΔT₃) kontinuierliche und diskontinuierliche Störsignale (39.1, 39.2) erkannt und unterschieden werden, und wobei die Störsignale (39.1, 39.2) nach Eigenstörungen (39.1) und Fremdstörungen diskriminiert werden (48); und
d) Anpassen (50) mindestens eines Sensorparameters für folgende Sendepulse (38.1, 38.2) in Reaktion auf erkannte Eigenstörungen (39.1),
**dadurch gekennzeichnet, dass** Eigenstörungen (39.1) anhand einer Plausibilitätsprüfung identifiziert werden, wobei die Plausibilitätsprüfung umfasst, dass eine Detektionsschwelle (39.3) in dem Horchfenster (ΔT₃) angepasst wird, wenn diskontinuierliche Störsignale (39.1) im Horchfenster (ΔT₃) detektiert werden, wobei die Plausibilitätsprüfung die Anzahl oder die Dauer einbezieht, mit der die Störsignale die Detektionsschwelle (39.3) im Horchfenster (ΔT₃) überschreiten.

2. Verfahren gemäß Anspruch 1, wobei mit Hilfe des Abstandssensors (18a, 18b, 18c, 18d) eine Laufzeitmessung durchgeführt wird.

3. Verfahren gemäß Anspruch 1 oder 2, wobei empfangene Signale sensorindividuell für einzelne Abstandssensoren (18a, 18b, 18c, 18d) und/oder zentral für mehrere Abstandssensoren (18a, 18b, 18c, 18d) verarbeitet werden.

4. Verfahren gemäß einem der Ansprüche 1 bis 3, wobei die Plausibilitätsprüfung zusätzliche Informationen einer übergeordneten Einheit (14) umfasst, die Signale mehrerer Abstandssensoren (18a, 18b, 18c, 18d) verarbeitet.

5. Verfahren gemäß Anspruch 4, wobei die übergeordnete Einheit (14) als Entscheidungsinstanz implementiert ist, die Relevanzaussagen hinsichtlich der Störsignale trifft.

6. Verfahren gemäß einem der Ansprüche 1 bis 5, wobei in Reaktion auf erkannte Eigenstörungen mindestens einer der folgenden Sensorparameter angepasst wird: ein Sendestrom, eine Sensorempfindlichkeit (32, 34) oder eine Sendepulslänge.

7. Verfahren gemäß einem der Ansprüche 1 bis 6, wobei in Reaktion auf erkannte Eigenstörungen eine Länge des Messzyklusses (ΔT) angepasst wird.

8. Computerprogramm zur Durchführung des Verfahrens nach einem der Ansprüche 1 bis 7, wenn das Computerprogramm auf einer programmierbaren Computereinrichtung ausgeführt wird.

9. Fahrassistenzsystem (11, 13, 15) zur Durchführung des Verfahrens gemäß einem der Ansprüche 1 bis 7 mit folgenden Komponenten:
i) mindestens einen Abstandssensor (18a, 18b, 18c, 18d) zum Aussenden mindestens eines Sendepulses (38.1, 38.2) mit bekannten Sensorparametern (32, 34) und/oder zum Empfangen mindestens eines Signals in einem Messzyklus (ΔT);
ii) eine Komponente zum Klassifizieren (46) der empfangenen Signale als Echosignale (38.3) oder Störsignale (39.1, 39.2), wobei die Störsignale (39.1, 39.2) nach Eigenstörungen (39.1) und Fremdstörungen diskriminiert werden (48); und
iii) eine Komponente zum Anpassen mindestens eines Sensorparameters für folgende Sendepulse (38.1, 38.2) in Reaktion auf erkannte Eigenstörungen (39.1).

## Claims

1. Method (40) for operating at least one distance sensor (18a, 18b, 18c, 18d) for detecting surroundings, having the following steps of:
a) emitting (42) at least one transmission pulse (38.1, 38.2) having known sensor parameters (32, 34);
b) receiving (44) signals in at least one measurement cycle (ΔT);
c) classifying (46) the received signals (44) as echo signals (38.3) or interference signals (39.1, 39.2), the measurement cycle (ΔT) being divided into at least one receiving interval (ΔT₂) and at least one listening window (ΔT₃) and continuous and discontinuous interference signals (39.1, 39.2) being detected and distinguished in the listening window (ΔT₃), and the interference signals (39.1, 39.2) being discriminated (48) according to inherent interference (39.1) and external interference; and
d) adapting (50) at least one sensor parameter for subsequent transmission pulses (38.1, 38.2) in response to detected inherent interference (39.1), **characterized in that** inherent interference (39.1) is identified using a plausibility check, the plausibility check comprising the fact that a detection threshold (39.3) is adapted in the listening window (ΔT₃) when discontinuous interference signals (39.1) are detected in the listening window (ΔT₃), the plausibility check including the number or duration for which the interference signals exceed the detection threshold (39.3) in the listening window (ΔT₃).

2. Method according to Claim 1, a transit time measurement being carried out with the aid of the distance sensor (18a, 18b, 18c, 18d).

3. Method according to Claim 1 or 2, received signals being processed in a sensor-specific manner for individual distance sensors (18a, 18b, 18c, 18d) and/or being processed centrally for a plurality of distance sensors (18a, 18b, 18c, 18d).

4. Method according to one of Claims 1 to 3, the plausibility check comprising additional information from a superordinate unit (14) which processes signals from a plurality of distance sensors (18a, 18b, 18c, 18d).

5. Method according to Claim 4, the superordinate unit (14) being implemented as a decision-making entity which makes relevance statements with regard to the interference signals.

6. Method according to one of Claims 1 to 5, at least one of the following sensor parameters being adapted in response to detected inherent interference: a transmission current, a sensor sensitivity (32, 34) or a transmission pulse length.

7. Method according to one of Claims 1 to 6, a length of the measurement cycle (ΔT) being adapted in response to detected inherent interference.

8. Computer program for carrying out the method according to one of Claims 1 to 7 when the computer program is executed on a programmable computer device.

9. Driving assistance system (11, 13, 15) for carrying out the method according to one of Claims 1 to 7, having the following components:
i) at least one distance sensor (18a, 18b, 18c, 18d) for emitting at least one transmission pulse (38.1, 38.2) having known sensor parameters (32, 34) and/or for receiving at least one signal in a measurement cycle (AT);
ii) a component for classifying (46) the received signals as echo signals (38.3) or interference signals (39.1, 39.2), the interference signals (39.1, 39.2) being discriminated (48) according to inherent interference (39.1) and external interference; and
iii) a component for adapting at least one sensor parameter for subsequent transmission pulses (38.1, 38.2) in response to detected inherent interference (39.1).

## Revendications

1. Procédé (40) destiné à mettre en fonctionnement au moins un capteur de distance (18a, 18b, 18c, 18d) destiné à identifier l'environnement, comprenant les étapes consistant à :
a) émettre (42) au moins une impulsion d'émission (38.1, 38.2) ayant des paramètres de capteur connus (32, 34) ;
b) recevoir (44) des signaux au cours d'au moins un cycle de mesure (ΔT) ;
c) classer (46) les signaux reçus (44) en tant que signaux d'écho (38.3) ou que signaux de brouillage (39.1, 39.2), dans lequel le cycle de mesure (ΔT) est divisé en au moins un intervalle de réception (ΔT₂) et au moins une fenêtre d'écoute (ΔT₃) et des signaux de brouillage continus et discontinus (39.1, 39.2) sont identifiés et sont distingués dans la fenêtre d'écoute (ΔT₃), et dans lequel les signaux de brouillage (39.1, 39.2) sont discriminés (48) en tant que brouillages propres (39.1) et que brouillages étrangers ; et
d) adapter (50) au moins un paramètre de capteur à des impulsions d'émission suivantes (38.1, 38.2) en réaction à des brouillages propres identifiés (39.1), **caractérisé en ce que** les brouillages propres (39.1) sont identifiés sur la base d'un test de plausibilité, dans lequel le test de plausibilité consiste à adapter un seuil de détection (39.3) dans la fenêtre d'écoute (ΔT₃) lorsque des signaux de brouillage discontinus (39.1) sont détectés dans la fenêtre d'écoute (ΔT₃), dans lequel le test de plausibilité inclut la proportion ou la durée de dépassement par les signaux de brouillage du seuil de détection (39.3) dans la fenêtre d'écoute (ΔT₃).

2. Procédé selon la revendication 1, dans lequel une mesure du temps de propagation est effectuée à l'aide du capteur de distance (18a, 18b, 18c, 18d).

3. Procédé selon la revendication 1 ou 2, dans lequel les signaux reçus sont traités individuellement en fonction des capteurs pour des capteurs de distance individuels (18a, 18b, 18c, 18d) et/ou de manière centralisée pour une pluralité de capteurs de distance (18a, 18b, 18c, 18d).

4. Procédé selon l'une quelconque des revendications 1 à 3, dans lequel le test de plausibilité comprend des informations supplémentaires d'une unité de niveau supérieur (14) qui traite des signaux de plusieurs capteurs de distance (18a, 18b, 18c, 18d).

5. Procédé selon la revendication 4, dans lequel l'unité d'ordre supérieur (14) est mise en oeuvre sous la forme d'une instance de décision qui tire des conclusions de pertinence en ce qui concerne les signaux de brouillage.

6. Procédé selon l'une quelconque des revendications 1 à 5, dans lequel au moins l'un des paramètres de capteur suivants sont adaptés en réaction à des brouillages propres identifiés : un courant d'émission, une sensibilité de capteur (32, 34) ou une longueur des impulsions d'émission.

7. Procédé selon l'une quelconque des revendications 1 à 6, dans lequel une longueur du cycle de mesure (ΔT) est adaptée en réaction à des brouillages propres identifiés.

8. Programme informatique destiné à mettre en oeuvre le procédé selon l'une quelconque des revendications 1 à 7 lorsque le programme informatique est exécuté sur un dispositif informatique programmable.

9. Système d'assistance à la conduite (11, 13, 15) destiné à mettre en oeuvre le procédé selon l'une quelconque des revendications 1 à 7, comprenant les composants suivants :
i) au moins un capteur de distance (18a, 18b, 18c, 18d) destiné à émettre au moins une impulsion d'émission (38.1, 38.2) ayant des paramètres de capteur connus (32, 34) et/ou à recevoir au moins un signal au cours d'un cycle de mesure (ΔT) ;
ii) un composant destiné à classer (46) les signaux reçus en tant que signaux d'écho (38.3) ou que signaux de brouillage (39.1, 39.2), dans lequel les signaux de brouillage (39.1, 39.2) sont discriminés (48) en tant que brouillages propres (39.1) et que brouillages étrangers ; et
iii) un composant destiné à adapter au moins un paramètre de capteur pour les impulsions d'émission suivantes (38.1, 38.2) en réaction à des brouillages propres identifiés (39.1).
